# FASCICULE DE BREVET EUROPEEN

(11) **EP 1 514 710 B1**
(45) Date de publication et mention de la délivrance du brevet: **05.09.2007**
(21) Numéro de dépôt: 04019386.4
(22) Date de dépôt: 16.08.2004
(51) Int. Cl.: B60H 3/00, B60H 3/06

(54) **Installation de chauffage/climatisation de véhicule automobile à flux d'air filtré**
Heizungs- und Klimaanlage für ein Kraftfahrzeug mit Flu der gefilterten Luft
Heating and air conditioning installation for a motor vehicle with flow of filtered air

(30) Priorité: 12.09.2003 FR 0310730
(43) Date de publication de la demande: 16.03.2005
(73) Titulaire: VALEO SYSTEMES THERMIQUES, 78320 Le Mesnil Saint-Denis (FR)
(72) Inventeur: Paumier, Carine, 78000 Versailles (FR); Ladrech, Frédéric, 78310 Maurepas (FR)

(56) Documents cités:
- DE-A- 19 836 307
- DE-A- 19 933 180
- GB-A- 1 559 629
- US-A- 3 988 131
- US-A- 4 244 712
- US-A1- 2003 029 319

## Description

### Arrière-plan de l'invention

La présente invention concerne la purification de l'air délivré dans l'habitacle d'un véhicule automobile.

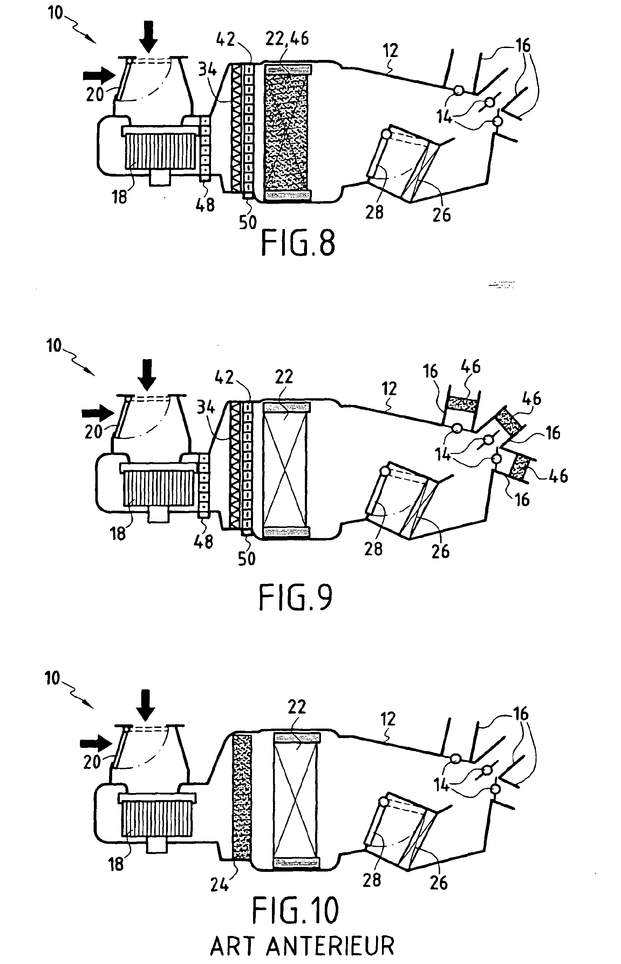

De façon traditionnelle, comme l'illustre la figure 10, une installation de chauffage/climatisation de véhicule automobile comporte un boîtier 10 délimitant un canal ou conduit de distribution d'air 12 qui, selon la position de volets commandés de distribution 14, amène l'air à traiter vers des bouches de sortie (de chauffage et de désembuage/dégivrage 16) ouvrant dans l'habitacle. Le débit de l'air passant dans le canal est produit par un groupe moto-ventilateur ou pulseur 18 recevant de l'air extérieur ou de l'air de recirculation en provenance de l'habitacle selon la position d'un volet de commutation 20 disposé en entrée du boîtier. Le refroidissement de l'air est assuré par au moins un évaporateur (ou échangeur de chaleur 22) disposé dans le canal et classiquement précédé d'un filtre à particules ou d'un filtre combiné 24 intégrant un filtre à charbon actif, ou plus généralement à adsorbant quelconque, pour le traitement des gaz odorants ou nocifs. Le réchauffement de l'air est quant à lui assuré par un radiateur 26 précédé, comme il est connu, d'un volet commandé de mixage 28.

Un tel dispositif est connu du document GB-A-1 559 629.

Avec un filtre à adsorbant, les molécules de gaz polluants sont retenues par un phénomène d'adsorption sur la surface poreuse de l'adsorbant, une désorption ou relargage de ces polluants pouvant être observée ensuite sous certaines conditions de température.

Malheureusement, il apparaît que ce type de filtre présente une durée de vie limitée se traduisant par une importante perte de charge et est d'une efficacité réduite quant à la destruction et/ou la limitation de la prolifération des bactéries ou micro-organismes présents dans le conduit de distribution et introduits dans l'habitacle par les bouches de sortie.

### Objet et résumé de l'invention

L'invention a pour objet une installation de chauffage/climatisation grandement améliorée par rapport aux dispositifs existants en ce qu'elle limite très fortement et aussi détruit les micro-organismes et les gaz véhiculés dans l'air ambiant, à l'origine des mauvaises odeurs apparaissant dans l'habitacle d'un véhicule automobile et assure ainsi une filtration optimale de l'air délivré à l'habitacle.

Un autre but de l'invention est de réaliser une telle installation de façon fiable et avec une mise en oeuvre simple.

Ces buts sont atteints grâce à une installation de chauffage/climatisation de l'habitacle d'un véhicule automobile comprenant un groupe moto-ventilateur délivrant un flux d'air dans un conduit de distribution d'air dans lequel est disposé au moins un évaporateur, caractérisée en ce qu'elle comporte un système de filtration électrostatique, comportant une partie ionisante et une partie collectrice, placé en amont d'un système de plasma catalyse comportant une partie génératrice de plasma et une partie de catalyse.

Par l'association de ces deux systèmes, le flux d'air est parfaitement filtré et la fréquence de maintenance de l'installation est réduite et le maintien des performances assurée entre deux opérations de maintenance.

Avantageusement, la partie génératrice de plasma est disposée en amont de l'évaporateur.

Selon le mode de réalisation envisagé, ladite partie ionisante peut être disposée en amont du groupe moto-ventilateur et en amont d'un volet de commutation assurant une commutation du flux d'air entre l'air extérieur et l'air provenant de l'habitacle et ladite partie collectrice peut être disposée en amont du groupe moto-ventilateur et en amont dudit volet de commutation.

Avantageusement, ladite partie de catalyse peut être disposée sur un support de type non-tissé ou alvéolaire placé en aval de l'évaporateur ou ladite partie de catalyse peut être formée par une surface de l'évaporateur. Mais, ladite partie de catalyse peut aussi être disposée dans des bouches de sortie ouvrant dans l'habitacle en aval de volets commandés de distribution.

De préférence, ladite partie ionisante du système de filtration électrostatique et ladite partie génératrice de plasma du système de plasma catalyse comportent des composants électroniques communs.

### Brève description des dessins

D'autres particularités et avantages du dispositif selon l'invention ressortiront à la lecture de la description faite ci-après, à titre indicatif mais non limitatif, en référence aux dessins annexés sur lesquels :
- la figure 1 illustre schématiquement un premier exemple de réalisation d'une installation de chauffage/climatisation selon l'invention équipant un véhicule automobile ;
- la figure 2 montre l'architecture d'un système de filtration électrostatique mis en oeuvre dans l'installation de chauffage/climatisation de la figure 1 ;
- la figure 3 montre l'architecture d'un système de plasma catalyse mis en oeuvre dans l'installation de chauffage/climatisation de la figure 1 ;
- la figure 4 illustre schématiquement une variante de réalisation de l'installation de chauffage/climatisation de la figure 1 ;
- la figure 5 illustre schématiquement une autre variante de réalisation de l'installation de chauffage/climatisation de la figure 1 ;
- la figure 6 illustre schématiquement encore une autre variante de réalisation de l'installation de chauffage/climatisation de la figure 1 ;
- la figure 7 illustre schématiquement une dernière variante de réalisation de l'installation de chauffage/climatisation de la figure 1 ;
- la figure 8 illustre schématiquement un autre exemple de réalisation d'une installation de chauffage/climatisation selon l'invention équipant un véhicule automobile ;
- la figure 9 illustre schématiquement encore un autre exemple de réalisation d'une installation de chauffage/climatisation selon l'invention équipant un véhicule automobile ; et
- la figure 10 illustre une installation de chauffage/climatisation de l'art antérieur équipant un véhicule automobile.

### Description détaillée des modes de réalisation

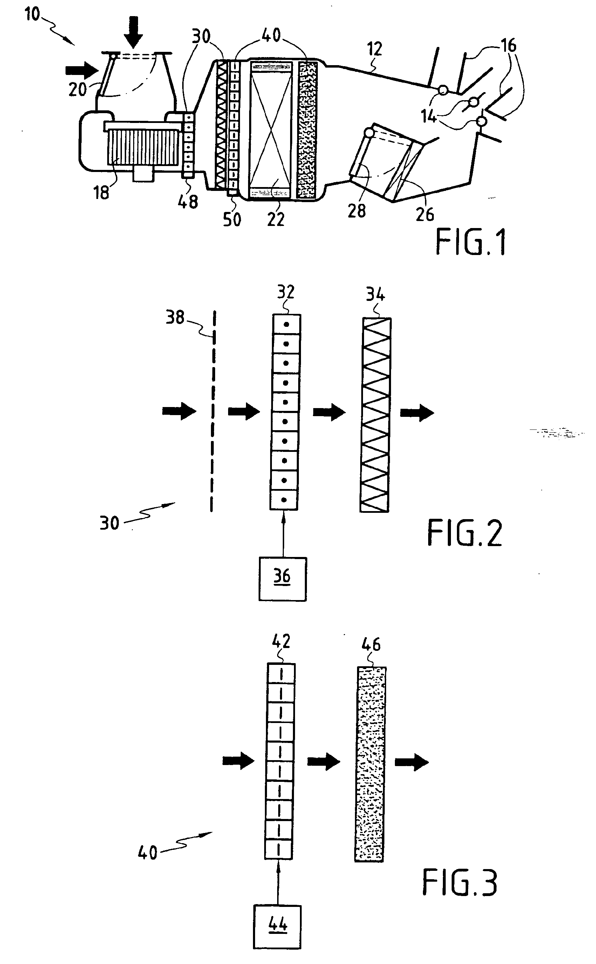

La figure 1 illustre schématiquement un premier exemple de réalisation d'une installation de climatisation de véhicule automobile selon l'invention.

Cette architecture se caractérise par l'emploi combiné, dans le conduit de distribution d'air 12 d'un boîtier 10 d'une telle installation de chauffage/climatisation comportant au moins un évaporateur 22, d'un système de filtration électrostatique 30 pour le traitement des particules de diamètre compris entre 0.1 micron et 10 microns (et plus) et d'un système de plasma catalyse 40 pour le traitement des gaz polluants, des odeurs et des micro-organismes.

La filtration électrostatique permet d'augmenter l'efficacité de collection des aérosols atmosphériques de faibles dimensions (notamment ayant de diamètres inférieurs à 0.5 micron) en jouant sur leur charge électrique. Comme l'illustre la figure 2, les particules traversant le système sont chargées par une partie ionisante 32 avant d'être recueillie par une partie collectrice 34 formée classiquement d'un filtre à particules, en fibres non tissées par exemple, plissé en accordéon pour faire apparaître des ondulations ou plis en forme de V afin d'augmenter la surface utile du filtre et diminuer la perte de charge.

La charge électrostatique est effectuée depuis une alimentation électrique continue haute tension 36 comprise entre 2 et 8 kV (typiquement 5 kV) et appliquée le plus souvent sous forme de décharges couronnes à une pluralité de fils électriques de faibles diamètres disposés en alternance avec des plaques conductrices parallèles. Une grille de préfiltration 38 est avantageusement placée en amont de la partie ionisante pour filtrer des éléments grossiers présentant des dimensions supérieures à une taille déterminée, par exemple 5 mm. Les particules en aval de la grille 38 sont ainsi ionisées par le ioniseur 32 avant d'être collectées par le filtre à particules 34.

La plasma catalyse consiste à épurer le flux d'air par l'action simultanée d'une partie génératrice de plasma formée d'un ou plusieurs générateurs de plasma et d'une partie de catalyse formée d'un ou plusieurs catalyseurs (à base d'oxyde métallique par exemple) déposés sur un support de type non-tissé ou alvéolaire (nids d'abeille par exemple) ou encore sur une surface métallique.

Comme l'illustre la figure 3, la partie génératrice de plasma 42 peut avantageusement faire appel à des décharges couronnes ou de type DBD (Décharge à Barrière Diélectrique) appliquées à différentes configurations d'électrodes : fils/plan, cylindre/plan, ou plan/plan par exemple. Ces décharges sont générées par une alimentation électrique alternative haute tension 44, de préférence utilisant des composants électroniques communs à celle alimentant la partie ionisante, comprise entre 3kV et 15kV. La puissance requise est comprise entre 50 et 200 W avec des fréquences supérieures à 50 KHz.

L'air traversant le système est traité par le plasma créé par la partie génératrice 42 avant d'être recueillie par la partie de catalyse 46. Le catalyseur peut être déposé seul ou en complément d'un adsorbant tel que du charbon actif, de la zéolite, un mélange des deux, ou encore tout autre adsorbant. Le charbon actif est, par exemple, constitué de grains de dimensions de l'ordre de 0,5 mm à 2 mm. Ces grains sont poreux avec des micropores de dimensions de l'ordre de 0,2 nm à 2 nm, des mesopores de dimensions de l'ordre de 2nm à 50 nm et des macropores de dimensions supérieures à 50nm. Le catalyseur peut par exemple être composé à base d'oxydes de manganèse et/ou de fer.

Par conséquent, le type de particules d'oxyde et leur proportion en masse par rapport au charbon actif est choisie de sorte que les pores de ce dernier ne soient pas obstruées. Ce rapport en masse est par exemple, compris entre 1% et 20%.

Revenons à la figure 1. Selon l'invention, le système de filtration électrostatique 30 est placé en amont du système de plasma catalyse 40 de façon à limiter le colmatage (et/ou l'empoisonnement) de ce dernier qui est ainsi protégé des concentrations de particules et la génération du plasma est effectuée en amont de l'évaporateur 22 de façon à épurer régulièrement des gaz, odeurs et micro-organismes, en continu ou non, la surface d'échange de cet évaporateur. De ce fait, les odeurs générées par les phénomènes d'adsorption/désorption des molécules gazeuses ou par la croissance de microorganismes à la surface et dans l'environnement immédiat de l'évaporateur sont fortement limitées. Le traitement du flux d'air est achevé au moyen du catalyseur déposé sur un support indépendant placé en sortie de l'évaporateur. En outre, avec cette configuration, le flux d'air est filtré qu'il provienne de l'extérieur (mode flux direct) ou de l'habitacle (mode recyclage).

Pour faciliter son installation dans le conduit de distribution d'air 12, les systèmes de filtration électrostatique et de plasma catalyse sont avantageusement montés chacun dans un cadre support, par exemple de forme rectangulaire, dont la surface définit une surface apparente de traitement pour l'air le traversant et dont les côtés transversaux présentent des logements 48, 50 destinés à accueillir des transformateurs (non représentés) se fixant sur les bords de ces logements.

Les transformateurs permettent de délivrer une tension comprise entre 2 et 15 kV à partir de l'alimentation haute tension (non représentée) reliée à la batterie du véhicule.

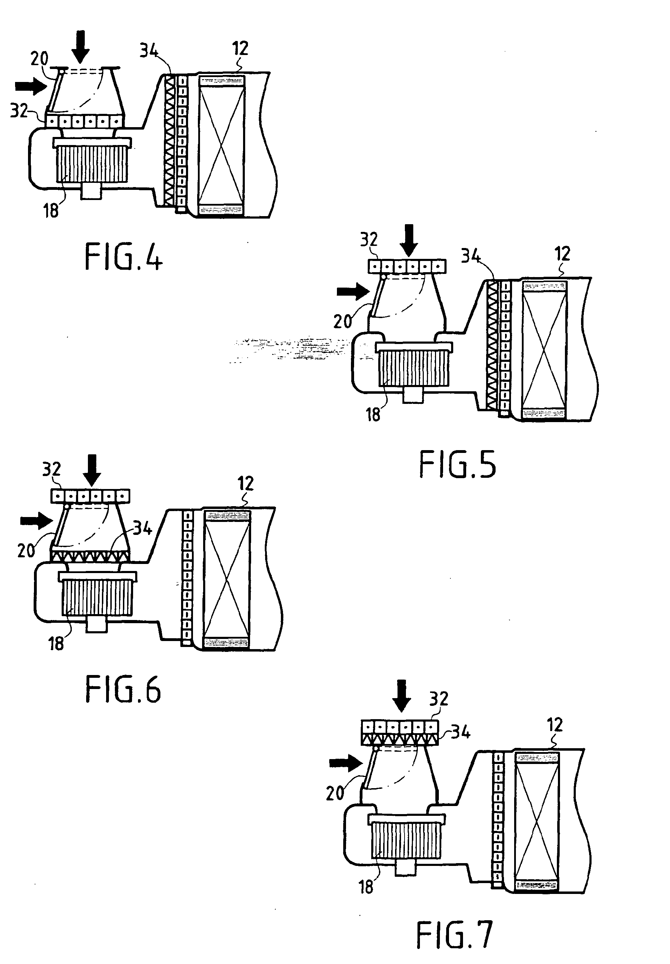

La figure 4 illustre une variante préférentielle de réalisation dans laquelle la partie ionisante 32 du système de filtration électrostatique est maintenant placée en amont le pulseur 18, de façon à améliorer sensiblement l'efficacité de collection. En effet, par cette configuration et du fait des phénomènes de coalescence, le système profite des turbulences provoquées par le pulseur augmentant la probabilité de rencontre entre les particules.

Dans la variante de réalisation de la figure 5, cette partie ionisante 32 est placée directement dans l'entrée d'air en amont du volet de commutation 20 assurant la commutation du flux d'air alimentant l'installation entre l'air extérieur et l'air provenant de l'habitacle, la partie collectrice 34 restant disposée en aval du pulseur 18. Ainsi, la partie ionisante est facilement accessible et utilise le volume disponible à cet endroit. Par contre, dans cette configuration, les particules générées en mode recyclage ne sont que partiellement traitées (car seulement filtrées mais pas ionisées).

Lorsque les volumes disponibles dans le conduit 12 sont limités, il peut être recouru aux variantes de réalisation des figures 6 et 7.

Sur la figure 6, la partie ionisante 32 est toujours disposée dans l'entrée d'air mais la partie collectrice 34 est maintenant disposée en amont du pulseur 18. Sur la figure 7, c'est l'ensemble du système de filtration électrostatique 30 ;32, 34 qui est disposé dans l'entrée d'air et donc facilement accessible. Toutefois, avec cette configuration les particules générées en mode recyclage ne sont pas traitées.

La figure 8 montre une autre variante de réalisation de l'invention dans laquelle le support du catalyseur est formé directement par l'évaporateur 22. En effet, celui-ci est recouvert du catalyseur qui peut être intégré dans le revêtement polymère de l'évaporateur, directement par un oxyde métallique approprié. Cette configuration apporte une efficacité accrue du fait de l'importance de la surface déployée et donc du temps de contact. On obtient aussi un gain de volume et de poids par suppression du support du catalyseur. En outre, la perte de charge globale du système est améliorée.

Enfin, sur la figure 9, ce catalyseur est disposé dans la zone de distribution d'air qui comporte en général de nombreux volumes morts (conduits d'air) et plus précisément dans les bouches de sortie 16 ouvrant dans l'habitacle en aval des volets commandés de distribution 14. On assure ainsi une meilleure isolation acoustique, au plus près des passagers, par rapport aux bruits aérauliques créés dans l'évaporateur et dans les conduits d'air. En outre, sa disposition au plus près des bouches de sortie d'air permet de distribuer aux passagers de l'habitacle un air plus propre (car issu directement de la filtration catalytique) au détriment toutefois de la maintenance éventuelle (encore relativement facile car accessible) du fait de la nécessité d'accès à plusieurs points différents.

On notera, que si de façon préférentielle, la partie génératrice de plasma est placée en amont de l'évaporateur, il est bien entendu aussi possible de la mettre en avant de l'évaporateur si la place dans le boîtier le permet.

## Revendications

1. Installation de chauffage/climatisation de l'habitacle d'un véhicule automobile comprenant un groupe moto-ventilateur (18) délivrant un flux d'air dans un conduit de distribution d'air (12) dans lequel est disposé au moins un évaporateur (22), avec un système de filtration électrostatique (30), comportant une partie ionisante (32) et une partie collectrice (34), **caractérisée en ce qu**'elle comporte un système de plasma catalyse (40) comportant une partie génératrice de plasma (42) et une partie de catalyse (46), placé en aval du système de filtration électrostatique.

2. Installation de chauffage/climatisation selon la revendication 1, **caractérisée en ce que** la partie génératrice de plasma (42) est disposée en amont de l'évaporateur (22).

3. Installation de chauffage/climatisation selon la revendication 1 ou la revendication 2, **caractérisée en ce que** ladite partie ionisante (32) est disposée en amont du groupe moto-ventilateur (18).

4. Installation de chauffage/climatisation selon la revendication 3, **caractérisée en ce que** ladite partie ionisante (32) est disposée en amont d'un volet de commutation (20) assurant une commutation du flux d'air entre l'air extérieur et l'air provenant de l'habitacle.

5. Installation de chauffage/climatisation selon la revendication 4, **caractérisée en ce que** ladite partie collectrice (34) est disposée en amont du groupe moto-ventilateur (18).

6. Installation de chauffage/climatisation selon la revendication 5, **caractérisée en ce que** ladite partie collectrice (34) est disposée en amont dudit volet de commutation (20).

7. Installation de chauffage/climatisation selon l'une quelconque des revendications 1 à 6, **caractérisée en ce que** ladite partie de catalyse (46) est disposée sur un support de type non-tissé ou alvéolaire placé en aval de l'évaporateur (22).

8. Installation de chauffage/climatisation selon l'une quelconque des revendications 1 à 6, **caractérisée en ce que** ladite partie de catalyse (46) est formée par une surface de l'évaporateur (22).

9. Installation de chauffage/climatisation selon l'une quelconque des revendications 1 à 6, **caractérisée en ce que** ladite partie de catalyse (46) est disposée dans des bouches de sortie (16) ouvrant dans l'habitacle en aval de volets commandés de distribution (14).

10. Installation de chauffage/climatisation selon l'une quelconque des revendications 1 à 9, **caractérisée en ce que** ladite partie ionisante (32) du système de filtration électrostatique (30) et ladite partie génératrice de plasma (42) du système de plasma catalyse (40) comportent des composants électroniques communs.

## Claims

1. Motor vehicle car interior heating/air conditioning installation comprising engine blowers (18) supplying an air flow in an air distribution canal (12) wherein at least one evaporator (22) is arranged, with an electrostatic filtration system (30), comprising an ionising part (32) and a collecting part (34), **characterised in that** it comprises a plasma catalysis system (40) comprising a plasma generating part (42) and a catalysis part (46), positioned downstream from the electrostatic filtration system.

2. Heating/air conditioning installation according to claim 1, **characterised in that** the plasma generating part (42) is arranged upstream from the evaporator (22).

3. Heating/air conditioning installation according to claim 1 or claim 2, **characterised in that** said ionising part (32) is arranged upstream from the engine blowers (18).

4. Heating/air conditioning installation according to claim 3, **characterised in that** said ionising part (32) is arranged upstream from a switching flap (20) switching the air flow between the outside air and the air from the car interior.

5. Heating/air conditioning installation according to claim 4, **characterised in that** said collecting part (34) is arranged upstream from the engine blowers (18).

6. Heating/air conditioning installation according to claim 5, **characterised in that** said collecting part (34) is arranged upstream from said switching flap (20).

7. Heating/air conditioning installation according to any of claims 1 to 6, **characterised in that** said catalysis part (46) is arranged on a non-woven or alveolar type support positioned downstream from the evaporator (22).

8. Heating/air conditioning installation according to any of claims 1 to 6, **characterised in that** said catalysis part (46) is formed by a surface of the evaporator (22).

9. Heating/air conditioning installation according to any of claims 1 to 6, **characterised in that** said catalysis part (46) is arranged in outlets (16) opening into the car interior downstream from controlled distribution flaps (14).

10. Heating/air conditioning installation according to any of claims 1 to 9, **characterised in that** said ionising part (32) of the electrostatic filtration system (30) and said plasma generating part (42) of the plasma catalysis system (40) comprise common electronic components.

## Patentansprüche

1. Heiz-/Klimaeinrichtung des Fahrgastraums eines Kraftfahrzeugs, welche einen Gebläsemotor (18) umfasst, der einen Luftstrom in einen Luftverteilungskanal (12) abgibt, in dem zumindest ein Verdampfer (22) angeordnet ist, mit einem elektrostatischen Filtriersystem (30), das einen ionisierenden Teil (32) und einen Kollektorteil (34) umfasst, **dadurch gekennzeichnet, dass** sie ein Plasmakatalysesystem (40) umfasst, das einen Plasma erzeugenden Teil (42) und einen Katalyseteil (46) aufweist und das dem elektrostatischen Filtriersystem nachgeschaltet ist.

2. Heiz-/Klimaeinrichtung nach Anspruch 1, **dadurch gekennzeichnet, dass** der Plasma erzeugende Teil (42) dem Verdampfer (22) vorgeschaltet ist.

3. Heiz-/Klimaeinrichtung nach den Ansprüchen 1 oder 2, **dadurch gekennzeichnet, dass** der besagte ionisierende Teil (32) dem Gebläsemotor (18) vorgeschaltet ist.

4. Heiz-/Klimaeinrichtung nach Anspruch 3, **dadurch gekennzeichnet, dass** der besagte ionisierende Teil (32) einer Umschaltklappe (20) vorgeschaltet ist, welche die Umschaltung des Luftstroms zwischen Frischluft und Luft aus dem Fahrgastraum sicherstellt.

5. Heiz-/Klimaeinrichtung nach Anspruch 4, **dadurch gekennzeichnet, dass** der besagte Kollektorteil (34) dem Gebläsemotor (18) vorgeschaltet ist.

6. Heiz-/Klimaeinrichtung nach Anspruch 5, **dadurch gekennzeichnet, dass** der besagte Kollektorteil (34) der besagten Umschaltklappe (20) vorgeschaltet ist.

7. Heiz-/Klimaeinrichtung nach einem der Ansprüche 1 bis 6, **dadurch gekennzeichnet, dass** der besagte Katalyseteil (46) auf einer Grundplatte nicht gewebten oder waffelartigen Typs angeordnet ist, welche dem Verdampfer (22) nachgeschaltet ist.

8. Heiz-/Klimaeinrichtung nach einem der Ansprüche 1 bis 6, **dadurch gekennzeichnet, dass** der besagte Katalyseteil (46) von einer Oberfläche des Verdampfers (22) gebildet wird.

9. Heiz-/Klimaeinrichtung nach einem der Ansprüche 1 bis 6, **dadurch gekennzeichnet, dass** der besagte Katalyseteil (46) in Austrittsöffnungen (16) angeordnet ist, welche gesteuerten Verteilungsklappen (14) nachgelagert sind und in den Fahrgastraum münden.

10. Heiz-/Klimaeinrichtung nach einem der Ansprüche 1 bis 9, **dadurch gekennzeichnet, dass** der besagte ionisierende Teil (32) des elektrostatischen Filtriersystems (30) und der besagte Plasma erzeugende Teil (42) des Plasmakatalysesystems (40) gemeinsame elektronische Komponenten aufweisen.
